# EUROPÄISCHE PATENTSCHRIFT

(11) **EP 0 922 505 B1**
(45) Veröffentlichungstag und Bekanntmachung des Hinweises auf die Patenterteilung: **02.02.2005**
(21) Anmeldenummer: 98119472.3
(22) Anmeldetag: 15.10.1998
(51) Int. Cl.: B07C 5/34, B07C 5/344

(54) **Verfahren und Vorrichtung zur automatischen und materialspezifischen Trennung von Telefonkarten**
Method and device for automatically separating telephone cards according to specific materials
Procédé et dispositif de séparation automatique de cartes téléphoniques selon leurs matériaux spécifiques

(30) Priorität: 12.12.1997 DE 19755219
(43) Veröffentlichungstag der Anmeldung: 16.06.1999
(73) Patentinhaber: Deutsche Telekom AG, 53113 Bonn (DE)
(72) Erfinder: Kaufhold, Jürgen Dr., 64807 Dieburg (DE); Joeckle, Rudolf Dr., 64807 Dieburg (DE)

(56) Entgegenhaltungen:
- EP-A- 0 269 889
- DE-A- 4 129 754
- US-A- 5 150 307
- SPANIOL H ET AL: "AUTOMATISCHES KLAUBEN BEIM ELEKTRONIKSCHROTTRECYCLING MITTELS INFRAROT-LASERIMPULS-THERMOGRAPHIE AUTOMATIC SORTING FOR ELECTRONIC SCRAP RECYCLING BY MEANS OF INFRARED LASER IMPULSE THERMOGRAPHY" AUFBEREITUNGS TECHNIK, VERLAG FUER AUFBEREITUNG SCHIRMER UND ZEH. WIESBADEN, DE, Bd. 36, Nr. 4, 1. April 1995 (1995-04-01), Seiten 179-185, XP000497413 ISSN: 1443-9302

## Beschreibung

Die Erfindung betrifft ein Verfahren und eine Vorrichtung zur automatischen und materialspezifischen Trennung von Karten mit Datenund Funktionsträgern wie Karten mit Magnetstreifen und Karten mit kontaktfrei und/oder kontaktbehaftet arbeitenden elektronischen Chips, insbesondere Telefonkarten, und zur Herstellung sortenreiner PVC- und ABS-Kunststofffraktionen.

Aus der DE 41 29 754 C2 ist ein Verfahren zur rechnergesteuerten Gewinnung sortenreiner Kunststofffraktionen aus Kunststoffteilen, insbesondere Verpackungsmaterialien, bestehenden Gemengen bekannt. Dabei wird während des Transports der Kunststoffteile durch eine Sortiervorrichtung eine Spektralanalyse des jeweiligen Kunststoffteils durchgeführt, indem eine Materialprobe verdampft und die Intensität des dabei emittierten Lichts als Funktion der Wellenlänge gemessen und aufgezeichnet wird. Die Materialart wird ermittelt, indem das gemessene Emissionsspektrum mittels eines Rechners automatisch mit gespeicherten Referenzspektren verglichen wird. Je nach Art des ermittelten Materials wird das Kunststoffteil mittels einer Ausschleusvorrichtung in entsprechende Sammelbehälter befördert.

Mit diesem Verfahren lassen sich prinzipiell aus beliebigen Gemengen von Kunststoffteilen sortenreine Kunststofffraktionen gewinnen, falls diese jeweils aus einem homogenen Kunststoff bestehen. Bei der praktischen Durchführung ergeben sich jedoch Nachteile bei der Trennung von Kunststoffteilen, in die metallische bzw. sonstige materialfremde Elemente eingebettet sind. Insbesondere zählen dazu Plastikkarten mit Daten- und Funktionsträgern, bei denen in den Kartenkörper bzw. auf der Kartenoberfläche Magnetstreifen, elektronische Chips mit Kontaktflächen, Induktionsspulen u. ä. eingebettet bzw. aufgebracht sind. Derartige Karten werden zunehmend im öffentlichen Leben eingesetzt, z.B. als Bank- oder Telefonkarten. Somit wächst auch die Menge an Karten, die nach Beendigung der Benutzung recycelt werden müssen. Gerade bei den nicht wiederaufladbaren Telefonkarten, deren Lebensdauer damit gering ist, fällt eine große Menge an Plastikabfall an, der wiederverwertet werden muß.

Aus einem Gemenge aus Telefon- und sonstige Funktionskarten können mit dem Verfahren der DE 41 29 754 C2 nicht ohne weitere Maßnahmen sortenreine Kunststofffraktionen gewonnen werden. Zum einen kann nicht ausgeschlossen werden, daß das aufgezeichnete Emissionsspektrum durch die materialfremden Funktionsträger verfälscht wird, zum anderen sind auch einem Materialtyp zugeordnete und aussortierte Karten noch nicht sortenrein, da sie noch materialfremde Funktionsträger enthalten.

Ein allgemeiner grundsätzlicher Nachteil des Verfahrens der DE 41 29 754 C2, der auch andere Bereiche als die automatische Kartentrennung trifft, ist der Aufwand an Analysezeit und Rechenkapazität, der pro untersuchtem Kunststoffteil nötig ist, um einerseits das gesamte Emissionsspektrum aufzuzeichnen, andererseits dieses Spektrum zu analysieren, mit einem Referenzspektrum zu vergleichen und damit das Material zu identifizieren.

Der Erfindung liegt daher die Aufgabe zugrunde, ein Verfahren zur Verfügung zu stellen, mittels dem aus einem Gemisch von Telefonkarten, Chipkarten, Magnetstreifenkarten und sonstigen Karten schnell und unter verringertem Analyseaufwand sortenreine Kunststofffraktionen gewonnen werden können. Weiterhin soll eine Vorrichtung zur Durchführung des Verfahrens zur Verfügung gestellt werden.

Die Aufgabe wird gelöst durch ein Verfahren zur automatischen und materialspezifischen Trennung von Karten mit Daten- und Funktionsträgern wie Karten mit Magnetstreifen und Karten mit kontaktfrei und/oder kontaktbehaftet arbeitenden elektronischen Chips, insbesondere Telefonkarten, und zur Herstellung sortenreiner PVC- und ABS-Kunststofffraktionen, mit folgenden rechnergesteuert automatisch ablaufenden Verfahrensschritten:
a) Halterung einzelner Karten in definierter Position auf einem Sortiertisch;
b1) Identifikation von Karten mit kontaktbehaftet arbeitenden elektronischen Chips, die an der Kartenoberfläche metallische Kontaktflächen aufweisen, durch einen oder mehrere Prüfkontakte, welche in den Bereichen, in denen sich Kontaktflächen normgemäß befinden können, an den Kartenkörper herangeführt werden und diesen berühren, wobei ein Prüfkontakt, der dabei eine metallische Kontaktfläche berührt, ein Signal abgibt und dieses Signal das Vorhandensein einer Chipkarte sowie die Lage der entsprechenden Kontaktfläche auf der Karte anzeigt,
   und/oder
b2) Identifikation von Karten mit kontaktbehaftet arbeitenden elektronischen Chips oder mit Magnetstreifen durch optische Untersuchung der Struktur der Kartenoberfläche;
c1) Identifikation von Karten (1) mit dem Kunststoff PVC als Kartenkörpermaterial durch Nachweis des in PVC gebundenen Chlors mittels einer Beilstein-Probe, indem Kartenkörpermaterial pyrolysiert und mit Kupfer zur Reaktion gebracht wird sowie die Lichtemission im Spektralbereich bei Wellenlängen λ zwischen etwa 500 bis 530 nm gemessen wird,
   und/oder
c2) Identifikation von Karten (1) mit dem Kunststoff ABS als Kartenkörpermaterial durch Nachweis der in ABS enthaltenen Nitril- (CN)-Gruppe, indem das Absorptionsverhalten des Kartenkörpers im infraroten Spektralbereich bei Wellenlängen zwischen 4,2 und 4,6 µm gemessen wird;
d) Ausstanzen des Kartenkörpers im Bereich der im Verfahrensschritt b) festgestellten Kontaktflächenposition zum Entfernen des Chips und der entsprechenden Kontaktfläche (27);
e) Auswurf der in den Verfahrensschritten b1) und/oder b2) sowie c1) und/oder c2) identifizierten Karten (1) bzw. nicht identifizierter Karten in entsprechende Sammelbehälter, wodurch somit wenigstens drei Fraktionen gebildet werden, darunter jeweils eine reine PVC- und eine reine ABS-Fraktion.

Weiterhin wird die Aufgabe gelöst durch eine Vorrichtung zur Durchführung des Verfahrens mit folgenden Merkmalen:
a) einen Sortiertisch mit einer Mehrzahl von rechteckförmigen Kartenaufnehmern jeweils der Länge und der Breite zu trennender Karten, wobei jeweils eine Karte paßgenau in einen Kartenaufnehmer einsetzbar und in diesem zu haltern ist;
b1) eine Identifikationseinheit zur Identifikation von Karten mit elektronischen Chips, welche einen oder mehrere Prüfkontakte aufweist, die an den im Kartenaufnehmer gehalterten Kartenkörper heranführbar sind und im herangeführten Zustand den Kartenkörper in dem Bereich berühren, in dem bei den zu identifizierenden Karten normgemäß Kontaktflächen angeordnet sein können, wobei ein Prüfkontakt bei Berührung der Karte ein vom Vorhandensein einer Kontaktfläche abhängiges Signal abgibt, welches von einer Auswerteeinheit ausgewertet wird und zur Identifikation der Karte sowie zur Lagebestimmung gegebenenfalls vorhandener Kontaktflächen dient,
   und/oder
b2) eine Identifikationseinheit zur Identifikation von Karten mit kontaktbehaftet arbeitenden elektronischen Chips oder mit Magnetstreifen, welche die Struktur der Kartenoberfläche mittels wenigstens eines optischen Sensors und/oder einer Kamera optisch untersucht, wobei die Sensor- bzw. Kamerasignale im Hinblick auf charakteristische Merkmale wie Position und Art der Daten- und Funktionsträger von einer Auswerteeinheit auswertet werden;
c1) eine Identifikationseinheit zur Identifikation von Karten, deren Kartenkörper aus dem Kunststoff PVC besteht, bestehend aus einer Anregungsquelle zur Pyrolyse einer Materialportion des Kartenkörpers, einem Detektor zur Detektion elektromagnetischer Strahlung sowie einem vor dem Detektor angeordneten Wellenlängenfilter, das für Wellenlängen λ zwischen etwa 500 bis 530 nm durchlässig ist, wobei die Intensität der detektierten Strahlung ein Maß für das Vorhandensein von Chlor und damit PVC ist,
   und/oder
c2) eine Identifikationseinheit zur Identifikation von Karten, deren Kartenkörper aus dem Kunststoff ABS besteht, bestehend aus einer Infrarot-Lichtquelle, einem Infrarot-empfindlichen Detektor, der im Anwendungsfall auf der der Lichtquelle entgegengesetzten Seite der Karte angeordnet ist und somit die Absorption der Karte mißt, sowie einem im Strahlengang angeordneten Filter, welches Wellenlängen λ zwischen 4,2 und 4,6 µm transmittiert, wobei die Intensität oder der Intensitätsabfall der transmittierten Strahlung ein Maß für die Absorption und damit für das Vorhandensein einer ABS indizierenden CN-Gruppe ist;
d) eine Ausstanzeinheit, bestehend aus wenigstens einem an den Kartenaufnehmer heranführbaren Stempel, welcher im Anwendungsfall den Kartenkörper im Bereich der im Verfahrensschritt c) festgestellten Kontaktflächenposition auszustanzen imstande ist.
e) wenigstens eine Auswurfeinheit, welche einzelne Karten vom Sortiertisch zu entfernen und Sammelbehältern zuzuführen imstande ist.

Die für Recyclingzwecke eingesammelten Karten bestehen zunächst aus einem Gemisch von Chipkarten mit kontaktbehaftet arbeitenden elektronischen Chips, insbesondere Telefonkarten mit einer metallischen Kontaktfläche, Chipkarten mit kontaktlos arbeitenden Chips, Magnetstreifenkarten und sonstigen Karten. Es kann davon ausgegangen werden, daß die insgesamt anfallenden Karten gleich groß und in gewissen Toleranzen gleich dick sind. Damit können sie in der Vorrichtung in definierter Position auf einem Sortiertisch gehaltert werden, und zwar in den Kartenaufnehmern, die an die Abmessungen von zu verarbeitenden Karten angepaßt sind.

Der Sortiertisch ist vorzugsweise in der Aufsicht von oben kreisförmig und um seine Mittelachse drehbar. Er weist eine Mehrzahl von Kartenaufnehmern auf, die in radialer Richtung auf bzw. in der Tischfläche angeordnet sind. Der Sortiertisch ist vorzugsweise mittels eines Motors mit vorbestimmter Taktfrequenz und vorbestimmtem Winkelinkrement um die Mittelachse drehbar, wobei die zur Kartenidentifikation und Bearbeitung dienenden Funktionselemente, insbesondere die Identifikationseinheiten, die Ausstanzeinheit und die Auswurfeinheit an den Winkelpositionen im Bereich des Sortiertisches angeordnet sind, die mit momentanen Ruhepositionen der Kartenaufnehmer korrespondieren. Somit kann gleichzeitig an verschiedenen Stationen gemessen bzw. ausgestanzt oder ausgeworfen werden, wobei eine Karte nacheinander diese Stationen durchläuft. Die Ausführung mit einem rotierenden Tisch ist zudem platzsparend. Gleichermaßen ist jedoch auch ein Transportband mit Kartenaufnehmern als Sortiertisch möglich.

Vorteilhaft werden die Karten in den Kartenaufnehmern durch Erzeugung eines Unterdrucks fixiert. Dazu weist die Bodenfläche eines jeden Kartenaufnehmers wenigstens eine Saugöffnung auf, welche über ein Steuerventil Vakuumanschluß hat bzw. mit einer Vakuumpumpe verbunden ist. Das Steuerventil ist rechnergesteuert zu betätigen, so daß jeweils eine neu in den Kartenaufnehmer eingesetzte Karte fixiert werden kann. Das Ansaugen über die Saugöffnungen kann auch unabhängig von einem Objekt kontinuierlich erfolgen.

Vorzugsweise sind eine Mehrzahl von Saugöffnungen in den Bodenfläche eines Kartenaufnehmers peripher angeordnet. Somit können auch gebogene Karten in einer ebenen Stellung fixiert werden.

Zunächst werden die Chipkarten mit kontaktbehaftet arbeitenden elektronischen Chips, insbesondere die Telefonkarten, abgetrennt. Dies erfolgt beim vorgeschlagenen Verfahren im Schritt b) anhand der Metallkontakte, die bei den kontaktlos übertragenden Karten und den Magnetstreifenkarten fehlen, oder auf optischem Wege, indem das Absorptions- bzw. Reflexionsverhalten der Kartenoberfläche analysiert wird.

Diese Identifikation ermöglicht zum einen eine Aussonderung von Magnetund kontaktlos übertragenden Karten, zum anderen die Feststellung der Kontaktflächenposition bei den übrigen kontaktbehaftet arbeitenden Karten, die weiter verarbeitet werden. Die übrigen Karten werden sofort nach der Feststellung der Kartenkategorie oder zu einem späteren Zeitpunkt unter Verwendung eines bekannten Ausschleusverfahrens ausgeworfen.

### Verfahrensschritt b1) zur Identifikation von kontaktbehaftet arbeitenden Chipkarten:

Mittels eines oder mehrerer Prüfkontakte wird festgestellt, ob die Karte metallische Kontaktflächen aufweist. Die Position dieser Kontaktflächen ist genormt, d.h. sie können sich lediglich in vier verschiedenen Bereichen auf der Chipkarte befinden. Der Prüfkontakt wird so von oben und unten an die Karte herangeführt, daß er die Kartenoberfläche in einem dieser Bereiche berührt. Befindet sich dort eine Kontaktfläche, so wird ein Signal erzeugt, das zum einen den Hinweis auf eine kontaktbehaftete Chipkarte gibt, zum anderen auch die Position der Kontaktfläche anzeigt. Der Prüfkontakt weist vorzugsweise zwei Kontaktfühler, also zwei metallische Stifte auf, wodurch beim Berühren der metallischen Kontaktfläche ein Kurzschluß als Signal hervorgerufen wird. Es kann ein Prüfkontakt verwendet werden, der relativ zur Kartenoberfläche auch transversal beweglich ist und nacheinander die verschiedenen Bereiche auf der Karte abtastet, gegebenenfalls auch von unten. Vorzugsweise weist die Vorrichtung jedoch vier Prüfkontakte auf, deren Lage im Anwendungsfall, d.h. im an eine Karte herangeführten Zustand, mit den normgemäß möglichen Positionen der Kontaktflächen korrespondiert. Falls in diesem Fall zusätzlich der Verfahrensschritt b2) durchgeführt wird, kann der Schritt b1) bereits mit drei Prüfkontakten erreicht werden.

### Verfahrensschritt b2) zur Identifikation von kontaktbehaftet arbeitenden Chipkarten und Magnetkarten:

Mittels einer optischen Anordnung aus Lichtquelle und Detektor oder Kamera wird das Absorptions- bzw. Reflexionsverhalten der Kartenoberfläche, vorzugsweise sowohl Ober- als auch Unterseite der Karte, bestimmt. Ein Lichtstrahl kann beispielsweise auf die möglichen Magnetstreifen und/oder Kontaktflächenpositionen gerichtet sein, wobei das Vorhandensein eines derartigen Funktionselements zu einer Veränderung des von einem oder mehreren optischen Sensoren abgegebenen Signals gegenüber dem Signal bei der Reflexion am reinen Kartenmaterial führt. Alternativ ist auch die Analyse eines Kamerasignals, z.B. mittels Bildverarbeitung, vorteilhaft. Somit lassen sich kontaktbehaftet arbeitenden Chipkarten und Magnetkarten untereinander sowie von kontaktlos arbeitenden Chipkarten, die keine sichtbaren Funktionselemente an der Kartenoberfläche aufweisen, trennen.

Im Verfahrensschritt d) erfolgt automatisiert eine Materialidentifikation. Bei der Herstellung von kontaktbehafteten Chipkarten, insbesondere Telefonkarten, werden praktisch ausschließlich PVC (Polyvinylchlorid) und ABS (Acrylnitril-Butadien-Styrol) als Materialien für die Kartenmatrix verwendet. Dieses wird beim erfindungsgemäßen Verfahren vorteilhaft ausgenutzt, indem spezifische Eigenschaften dieser beiden Materialien als Entscheidungskriterien für das Vorliegen der einen oder der anderen Kartenmatrix dienen. Die wenigen Karten aus einem anderen Material, die mit diesem Verfahren zunächst nicht klassifiziert werden können, werden automatisch aussortiert.

Für die bei den kontaktbehafteten Chipkarten verwendeten Kunststoffe PVC und ABS gibt es eindeutige spektroskopische Nachweise hoher Empfindlichkeit. Ist eine Karte zuvor eindeutig als kontaktbehaftete Chipkarte identifiziert, dann würde es zur Trennung theoretisch ausreichen, einen der beiden Kunststoffe spektroskopisch nachzuweisen. Aus Sicherheitsgründen ist jedoch eine getrennte Identifizierung beider Kunststoffe in den Schritten d1) und d2) vorzuziehen, um anschließend möglicherweise auch sonstige Chip- und Magnetstreifenkarten in die Auftrennung einschließen zu können.

Bei der hier vorliegenden Aufgabe müssen nur zwei von vornherein bekannte Kunststoffe sortiert werden, wobei deren spektroskopische Eigenschaften gezielt ausgenutzt werden. Zur Identifikation von PVC wird lediglich ein kleiner Ausschnitt des elektromagnetischen Spektrums und im Fall des ABS eine definierte Absorptionsbande verwendet. Dies führt zu erheblich verringerten Analysezeiten pro Objekt, weil der Zeitaufwand zum Aufzeichen eines vollständigen Spektrums sowie der Rechenaufwand für einen Abgleich der Spektren mit einer Mehrzahl von Standardspektren entfällt.

### Verfahrensschritt d1) zur PVC-Identifikation:

Entsprechend der Formel [CH₂-CHCl-]ₙ enthält PVC kovalent gebundenes Chlor, das bei einem pyrolytischen Abbau wie Verdampfung, Plasmabildung, Verbrennung freigesetzt wird. Bei Anwesenheit von elementarem Kupfer wird dieses durch das Chlor oxdiert. Das entstehende CuCl₂ zeigt eine intensive grüne Flammenfärbung im Spektralbereich zwischen 500 bis 530 nm, die auf die Anwesenheit von Chlor hinweist. Dieser unter dem Namen BEILSTEIN-Probe bekannte Nachweis von kovalent gebundenem Chlor ist außerordentlich empfindlich und dient erfindungsgemäß zur Identifikation des Kartenmaterials PVC, da ansonsten keine chlorhaltigen Materialien für Chip- oder Magnetkarten verwendet werden.

Die Intensität des im Licht im Spektralbereich zwischen 500 - 530 nm emittierten Lichts wird mit einem Detektor gemessen, wobei Wellenlängen außerhalb dieses Bereichs mit einem Filter, beispielsweise Interferenzfilter, unterdrückt werden. Anstatt ein gesamtes breitbandiges Emissionsspektrum aufzunehmen, wird hier die Unterscheidung, ob PVC vorliegt oder nicht, anhand eines einzigen Meßpunkts, nämlich des Wellenlängen zwischen 500 - 530 nm zugeordneten Intensitätswertes, getroffen, wobei andere Bereiche des Spektrums außer Betracht bleiben. Die gemessene Intensität wird mit einer vorbestimmten Schwelle verglichen; dieses kann rechnergesteuert schnell durchgeführt werden und führt zu einer schnellen und zuverlässigen Identifikation des Kartenmaterials PVC.

Die Anregung des Kartenmaterials erfolgt zweckmäßig durch einen gepulsten Laser, kann jedoch bei genügend hoher Laserleistung und Fokussierung auch im kontinuierlichen Betrieb erfolgen. Alternativ wird eine Funkenanregung vorgeschlagen.

Da die Beilstein-Probe die Anwesenheit von elementarem Kupfer erfordert, wird vor der Pyrolyse des Kartenmaterials im Verfahrensschritt d1) ein Kupferpulver, vorzugsweise als Mischung aus Kupferpulver, Bindemittel und leicht flüchtigem Lösungsmittel, auf die Karte aufgebracht, wobei die Vorrichtung dazu vorzugsweise eine Dosiereinheit aufweist, welche die Mischung in einem definierten Bereich auf die Karte aufbringt.

Falls die Pyrolyse des Kartenmaterials mittels Funkenanregung erfolgt, werden zur Erzeugung der Gasentladung vorzugsweise Kupferelektroden verwendet. Da bei einer Gasentladung aus stets eine geringe Menge an Elektrodenmaterial abgesondert wird, kann damit auf das gesonderte Zufügen von Kupfer verzichtet werden.

### Verfahrensschritt d2) zur ABS-Identifikation:

Entsprechend der Formel 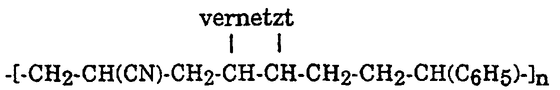 besitzt ABS (Acrylnitrilbutadienstyrol) eine Nitril- (CN)-Gruppe, die im ultraroten Spektralbereich bei einer Wellenlänge von 4,4 µm eine starke Absorptionsbande hat. Diese Absorptionsbande wird zur Identifikation von ABS genutzt, indem das Absorptionsverhalten der Karte in diesem Wellenlängenbereich von 4,2 bis 4,6 µm, vorzugsweise 4,4 µm gemessen wird. Dazu wird die Karte mit von einer Infrarot-Lichtquelle, beispielsweise ein Nernst-Stift, erzeugtem Infrarotlicht durchleuchtet und die Intensität im Wellenlängenbereich von4,2 bis 4,6 µm, vorzugsweise 4,4 µm, mittels eines Infrarot-Detektors gemessen. Vor dem Detektor befindet sich ein entsprechendes wellenlängenselektierendes Filter, beispielsweise ein IR-Bandpaßfilter. Kein anderer Kunststoff absorbiert in diesen Spektralbreich so stark, so daß sich auch hier Spezifität, gegebenenfalls unter Vergleich der gemessenen Intensität mit einer vorbestimmten Schwelle, mit hoher Nachweisempfindlichkeit verbindet.

Keines der beiden Nachweisverfahren wird durch die Oberflächenfarben nennenswert gestört, mit denen wegen der Werbeaufdrucke immer gerechnet werden muß.

Bei kontaktbehafteten Chipkarten wird im Verfahrensschritt e) der Chip mitsamt Kontaktfläche ausgestanzt, so daß die Kartenmatrix aus reinem Kunststoff zurückbleibt. Dazu weist die Vorrichtung wenigstens einen, vorzugsweise jedoch zwei oder vier Ausstanzsstempel prinzipiell bekannter Konstruktion auf. Im Falle eines Stempels muß dieser transversal zur Kartenfläche beweglich sein, um Kontaktflächen, die sich an vier verschiedenen Stellen auf dem Kartenkörper befinden können, auszustanzen. Im Falle von vier Stempeln sind diese derart angeordnet, daß ihre Lage mit der möglichen Lage der Kontaktflächen korrespondiert, falls sich eine Karte in der Ausstanzeinheit befindet. Bevorzugt wird eine Ausgestaltung mit zwei Stempeln, deren Stempelfläche etwa die Länge einer Kontaktfläche aber eine gegenüber einer Kontaktfläche vergrößerte Breite hat. Diese Stempel sind symmetrisch zur Kartenlängs- wie auch -querachse so angeordnet, daß jeweils zwei Kontaktflächenpositionen in der rechten bzw. linken Hälfte der Karte mit einem Stanzvorgang erfaßt sind. Die Fläche an reinem Kartenmaterial, die dabei zu viel ausgestanzt wird, ist gegenüber der zurückbleibenden Kartenfläche zu vernachlässigen, die Version mit zwei Stempeln jedoch gegenüber vier Stempeln mechanisch einfacher zu realisieren.

Mittels geeigneter Stanzwerkzeuge werden in einer Weiterbildung der Erfindung auch die Magnetstreifen in der identifizierten Lage entfernt.

Der Boden des Sortiertisches bzw. der einzelnen Kartenaufnehmer weist wenigstens im Bereich der Ausstanzeinheit an Form und Lage der Stempel angepaßte Ausstanzlöcher auf.

Die Identifikationsergebnisse aus den Schritten b) und d) dienen zur rechnergesteuerten Entscheidung, welche Karten zu welchem Zeitpunkt ausgeschleust werden sollen. Vorzugsweise erfolgt der Auswurf an festen Stellen des Sortiertisches in bereitgestellte Sammelbehälter. Kontaktlose Chipkarten und Magnetkarten werden nach Identifizierung ohne Weiterbearbeitung ausgeworfen; kontaktbehaftete Chipkarten aus PVC oder ABS nach Ausstanzen der Chips und Kontaktflächen in materialspezifische Sammelbehälter. In einer Weiterbildung des Verfahrens werden auch bei Magnetstreifenkarten die Magnetstreifen ausgestanzt; diese Karten können dann auch einer sortenreinen Kunststofffraktion zugeführt werden.

Der Auswurf der Karten erfolgt mittels eines Druckluftstoßes oder mittels eines mechanischen Stoßes, der durch eine Auswurföffnung im Sortiertisch erfolgt, oder durch Ansaugen und Herausheben der Karte vom Sortiertisch. Die Karten werden damit in Abhängigkeit von den festgestellten Kartenmaterialien und Funktionsträgern separaten Sammelbehältern zugeführt, wobei wenigstens eine sortenreine PVC- und eine sortenreine ABS-Fraktion ohne metallische Verunreinigungen hergestellt wird.

Kurzbeschreibung der Zeichnung, in der zeigen:
- Figur 1: Die Vereinzelung der Karten aus einem Kartengemenge zu Beginn des Verfahrens;
- Figur 2: die Kartenzuführung zum Sortiertisch;
- Figur 3: eine schematische Darstellung eines Sortiertisches mit acht Kartenaufnehmern;
- Figur 4: die Vakuumzuführung zu einem Kartenaufnehmer von unten;
- Figur 5a+b: eine Aufsicht auf einen Kartenaufnehmer von oben bzw. im Querschnitt;
- Figur 6: die Vakuumzuführung entlang der Drehachse des Sortiertisches;
- Figur 7a-e: Trennung zwischen kontaktbehafteten und kontaktfreien Karten auf elektrischem Wege mittels Prüfkontakten;
- Figur 8: Materialidentifikation PVC durch Beilstein-Probe;
- Figur 9: Materialidentifikation ABS durch Infrarot-Absorption.

Es wird vorweggenommen, das alle im folgenden beschriebenen Sortierschritte rechnergesteuert erfolgen und ein entsprechendes Rechnerprogramm Teil der Apparatur ist. Diese Tatsache wird aus Vereinfachungsgründen nicht mehr erwähnt.

### Kartenvereinzelung:

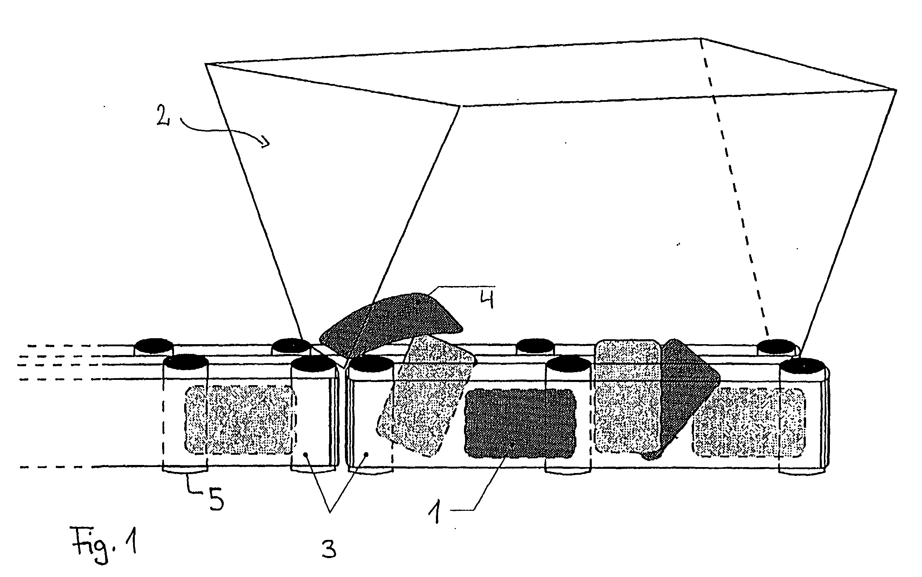

Das Kartengemisch wird, der schematischen Darstellung in Fig. 1 entsprechend, in einen trichterförmigen Schacht 2 eingeschüttet, der sich nach unten verjüngt. Die Karten 1 rutschen durch ihr Eigengewicht nach unten und werden dort von einem Laufband 3 erfaßt, das um Transportrollen 5 läuft. Durch die geometrische Gestaltung der Öffnung am Schachtende und unter Zuhilfenahme eines Kartenbegrenzers 4 werden die Karten einzelnen und in Richtung ihrer Längsachse liegend weitertransportiert. Dieses Prinzip wird in ähnlicher Form bei Briefsortieranlagen verwendet. Zu stark verbogene Karten bleiben zurück und müssen von Zeit zu Zeit manuell entfernt werden.

### Kartenstapelung:

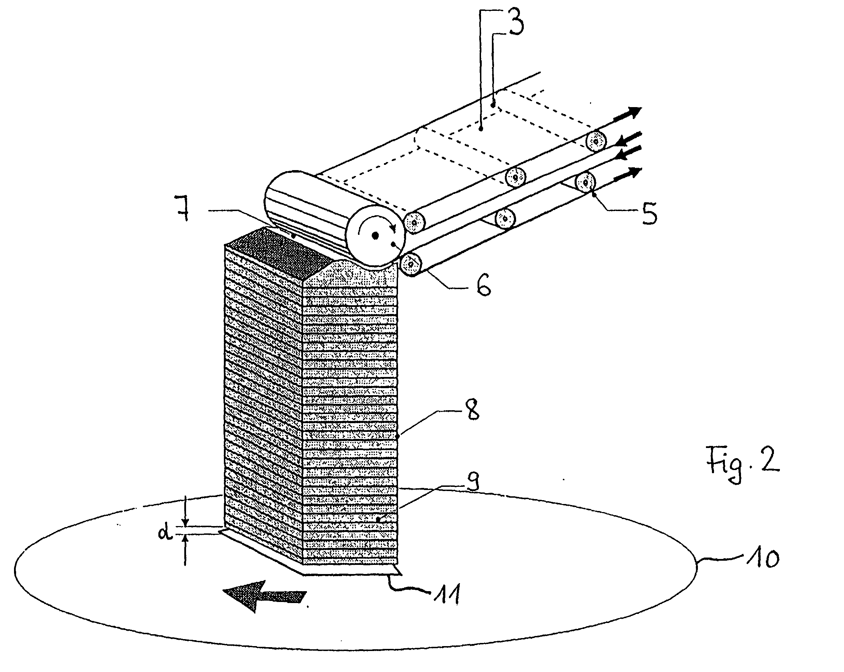

Das Transportband 3 mündet in einem Stapelschacht 8 entsprechend Fig. 2, welchen die Karten über eine Walze 6 erreichen. Im Stapelschacht 8 bildet sich dadurch ein Kartenstapel 9 aus. Hier werden die Karten durch das Transportband 3 so eingeführt, daß sie von dem darunterliegenden rotierenden Sortiertisch 10 erfaßt und durch Ansaugen von dem Kartenaufnehmer 11 fixiert werden können.

### Sortierablauf:

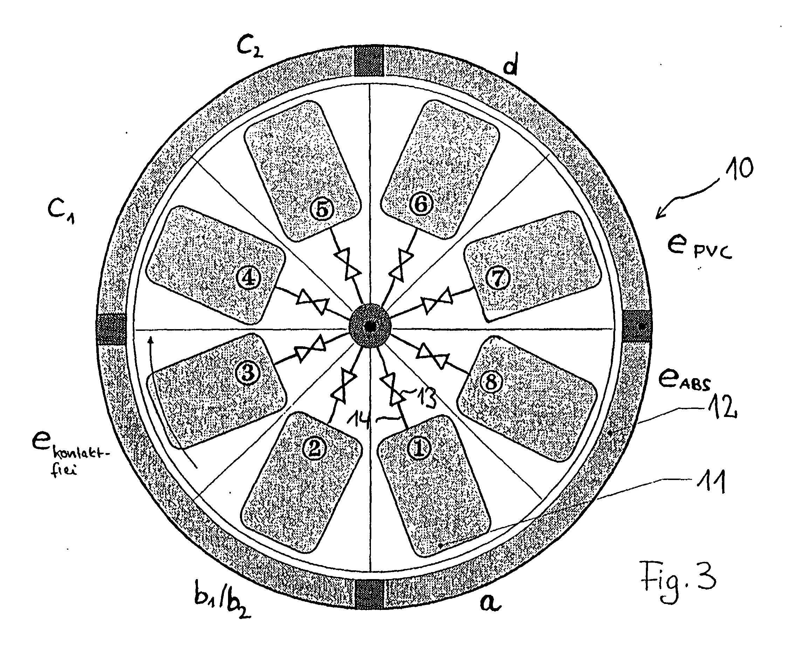

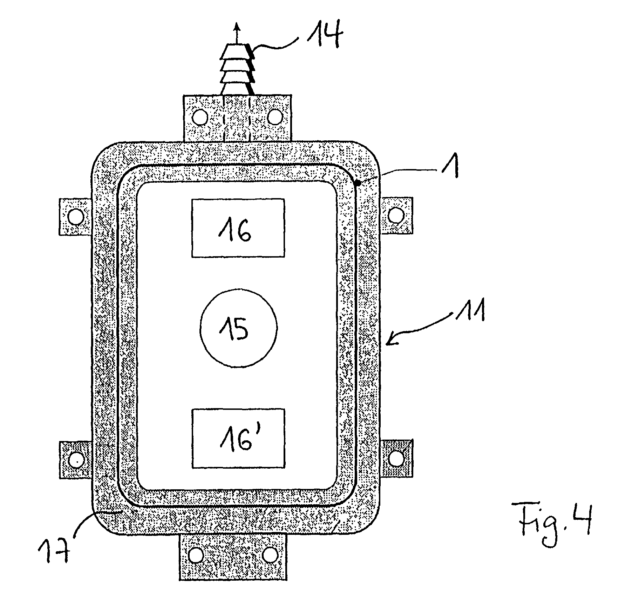

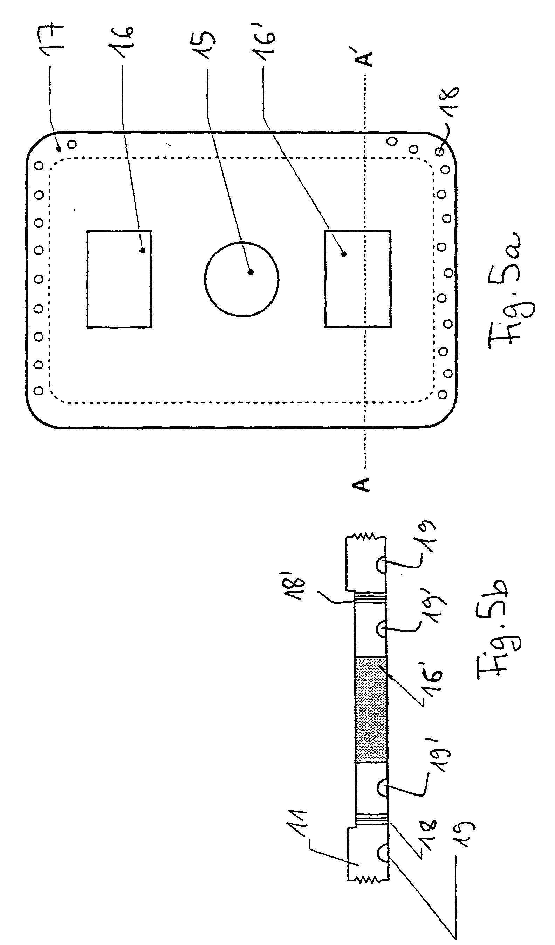

Kernstück der Anordnung ist ein kreisförmiger rotierender Sortiertisch 10 entsprechend Fig. 3. Im einfachen Fall könnte bereits ein Tischdurchmesser von 1-2 m ausreichen. Ein Schrittmotor bewegt diesen Tisch mit einer sinnvollen Taktfrequenz, die auf die an den einzelnen Funktionselementen notwendige Analyse- bzw. Bearbeitungszeit abgestimmt ist. Der Sortiertisch 10 trägt acht Kartenaufnehmer 11, die durch eine Vakuumzuführung 14, die durch ein Steuerventil 13 freigegeben wird, über Vakuumanschluß verfügen. Die Kartenaufnehmer sind durch eine Aussparung in der Sortiertischfläche gebildet, deren Abmessungen an die Abmessungen der zu bearbeitenden Karten 1 angepaßt sind, wobei jeweils eine Karte paßgenau in einem Kartenaufnehmer zu haltern ist (Schritt a). Die Karten werden im Kartenaufnehmer durch Unterdruck fixiert. Die dazu notwendige Vakuumzuführung 14 ist in Fig. 4 genauer dargestellt. Figur 4 zeigt die Unteransicht eines solchen Kartenaufnehmers 11, wobei das Vakuum in einem Kanal im Randbereich 17 des Kartenaufnehmers 11 geführt wird und durch in Figur 5 a und b dargestellte Ansaugöffnungen 18 eine Karte 1 im Kartenaufnehmer 11 in einer definierten Position fixiert. Nach der Querschnittsdarstellung der Fig. 5 b befindet sich innerhalb und außerhalb des peripheren Rings aus Ansaugöffnungen 18 jeweils ein Aufnahmekanal 19, 19' für einen Dichtungsring.

Der Stapelschacht 8 mündet gemäß Fig. 2 in einem Abstand d über dem Sortiertisch, der kleiner als eine durchschnittliche Kartendicke ist. Dadurch ist gewährleistet, daß eine Karte 1 nur dann den Schacht 8 einzeln verlassen kann, wenn die Karte 1 in die vorbeigeführte Vertiefung des Kartenaufnehmers 11 hineinrutscht und bei zeitrichtiger Öffnung des Steuerventils 13 durch das Vakuum angesaugt wird. Dadurch können auch Karten mit leichten Durchbiegungen fixiert werden.

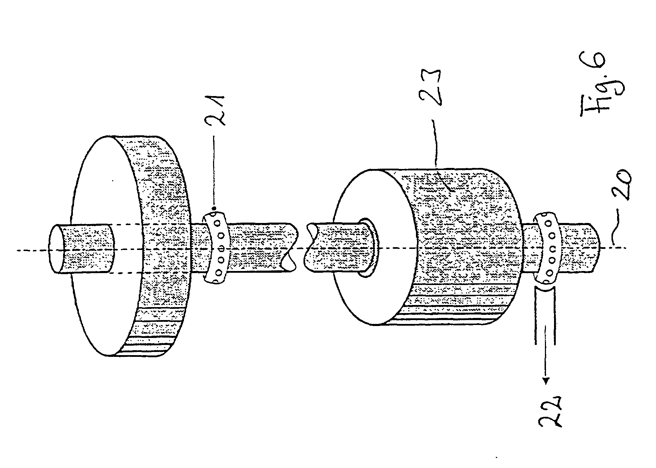

Die Vakuumzuführung erfolgt nach Figur 6 entlang der Motor- bzw. Tischachse 20. Im Bereich der Sortiertischfläche weist die Tischachse eine Mehrzahl von Anschlüssen 21 zur Herstellung einer Vakuumzuführung 14 zu den einzelnen Kartenaufnehmern 11 auf. Darunter befindet sich eine weitere Vakuumzuführung 22 zur Vakuumpumpe. Alternativ ist die Vakuumpumpe 23, wie in Fig. 6 angedeutet, direkt an der Achse 20 befestigt und wird mitbewegt, um Dichtungsproblemen vorzubeugen.

In die Kartenaufnehmer 11 sind entsprechend Fig. 4 und Fig. 5 a drei Öffnungen eingearbeitet. Es handelt sich im einzelnen um zwei rechteckige Stanzöffnungen 16, 16' wenigstens der Größe einer Kontaktfläche und eine mittig in der Bodenfläche des Kartenaufnehmers angeordnete Auswurföffnung 15.

Der Sortiertisch 10 wird an der Peripherie auf Rollen gelagert und in einem Führungsrahmen 12 geführt. Auf der feststehenden Umrandung, dem Führungsrahmen 12 werden die einzelnen aktiv an der Sortierung beteiligten Komponenten wie Identifikationseinheiten, Ausstanzeinheit, Auswurfeinheit in definierten Winkelpositionen befestigt. Der Sortiertisch wird getaktet so gedreht, daß sich in den Ruhephasen jeweils ein Kartenaufnehmer im Arbeitsbereich eines Funktionselements befindet und die darin gehalterte Karte analysiert, bearbeitet bzw. ausgeworfen werden kann. Die Position des Funktionselemente relativ zum Sortiertisch ist in Figur 1 jeweils mit der Bezeichnung des Verfahrens- bzw. Vorrichtungsmerkmals a bis e angedeutet. Dabei bedeutet a Kartenzufuhr und Halterung, b1/2 Kontaktflächenidentifikation, c1/2 Materialidentifikaton, d Ausstanzen, e Auswurf. Es sind drei Auswurfeinheiten e für den Auwurf von kontaktbehaftenen PVC- bzw. ABS-Karten bzw. sonstiger Karten vorhanden.

Nach dem Einfügen einer Karte in einen Kartenaufnehmer wird mit einer Dosiervorrichtung in definierter Position auf der Karte eine geringe Menge einer Mischung aus Kupferpulver, Bindemittel und leicht flüchtigem Lösungsmittel aufgebracht. Diese Mischnung wird für die PVC-Identfizierung benötigt.

### Unterscheidung der kontaktbehafteten Karten von anderen Karten (Schritt b1 bzw. b2):

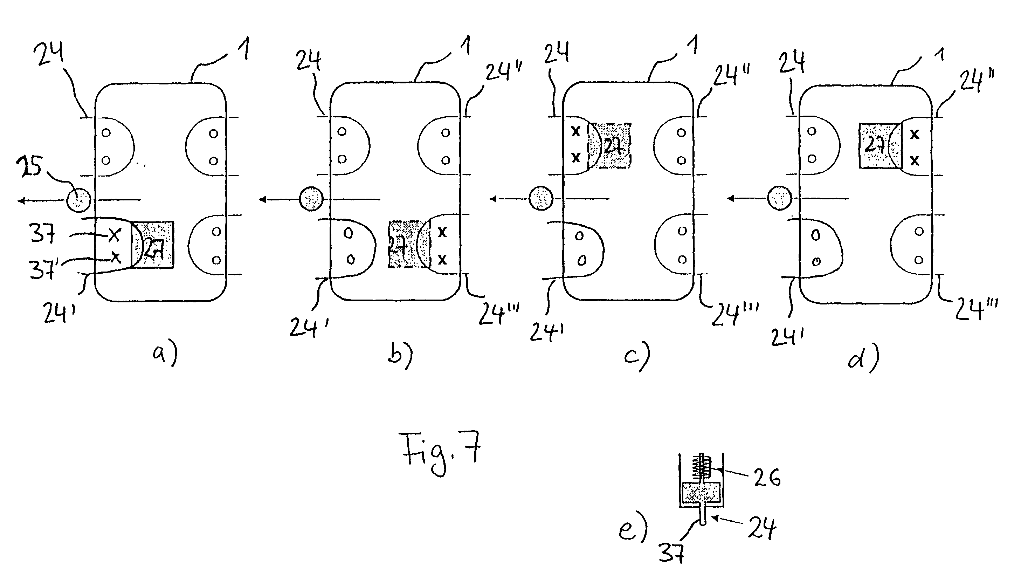

Zur Ausfilterung der kontaktbehafteten Karten 1 wird deren metallische Kontaktfläche 27 verwendet, wobei mittels vier Prüfkontakten 24, 24', 24", 24''' mit jeweils zwei metallischen Kontaktfühlern 37, 37' festgestellt wird, ob und gegebenenfalls wo sich metallische Kontaktflächen auf der Kartenoberfläche befinden (Schritt b1). Gleichzeitig ist die Kenntnis der Kontaktposition für den späteren Stanzvorgang wichtig. Da die Kontaktfläche 27 asymmetrisch zur Längsachse der Karte liegt, werden hierzu in diesem Beispiel entsprechend Fig. 7 vier Prüfkontakte 24, 24', 24", 24''' verwendet. Die Figuren 7 a bis d zeigen die vier möglichen Lagen der Kontaktfläche 27, wobei eine gestrichelt umrandete Kontaktfläche bedeutet, daß sich diese in Blickrichtung an der Kartenunterseite befindet.

Im Beispiel der Fig. 7 werden zwei Prüfkontakte 24, 24''' von unten und zwei Prüfkontakte 24', 24" von oben an die Karte herangeführt. Die Heranführung von unten erfolgt zweckmäßig durch die Stanzlöcher 16, 16'. Die Lage der Kontaktfläche ergibt sich jeweils danach, welcher Prüfkontakt kurzgeschlossen wird, was symbolisch mit x x gekennzeichnet ist.

Eine beispielhafte Ausführung eines Prüfkontakts zeigt Fig. 7 e. Er besteht aus zwei metallischen Kontaktfühlern 37, die voneinander isoliert geführt und mittels einer Feder 26 an die Kartenoberfläche herangedrückt werden, wobei beim Berühren einer metallischen Fläche ein Kurzschluß gemessen wird.

Mit einem zusätzlichen, für die Abtrennung der kontaktbehafteten Karten nicht unbedingt erforderlichen optischen Sensor 25, wird noch zwischen Chip- und Magnetstreifenkarten auf Grund des Reflexions- bzw. Absorptionsverhaltens der Kartenoberfläche unterschieden (Schritt b2). Diese Karten könnten dann in die Trennung PVC / ABS / sonstige Karten. einbezogen werden. Insofern ist die Anordnung erweiterungsfähig.

### Kartenidentifikation PVC (Schritt c1):

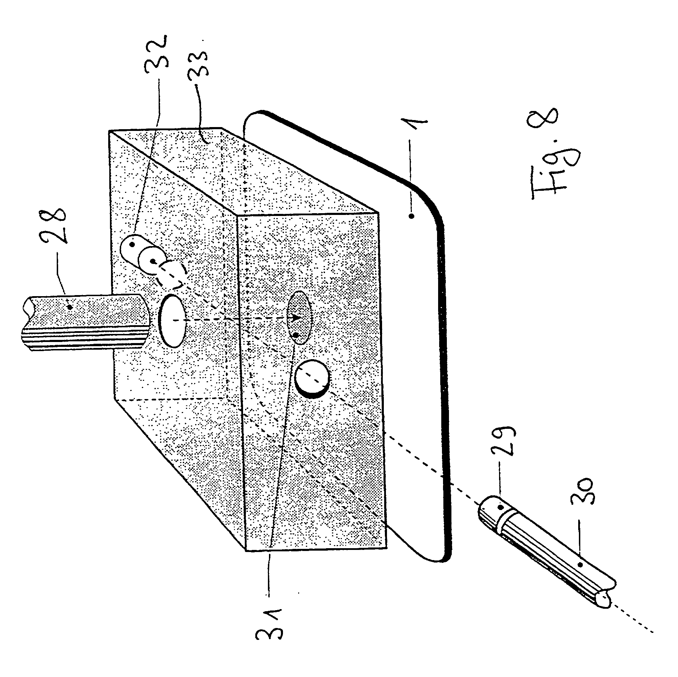

Die Meßanordnung zur Identifikation von PVC-Karten zeigt Fig. 8. Ein gepulster Laser 28 verdampft und pyrolisiert etwas Kartenmatrix-Material zusammen mit dem zuvor aufgebrachten Kupferpulver 31. Die bei PVC-Karten auftretende grüne Flammenfärbung wird durch ein Interferenzfilter 29 ausgeblendet und über einem Detektor 30, z.B. eine Photozelle oder ein Si-Detektor, durch den Rechner registriert. Laser 28 und Detektor 30 sind unter etwa 90° relativ zueinander angeordnet, um direkte Lasereinstrahlung auf den Detektor zu verhindern.

Die Meßstelle ist von einer Schutzabdeckung 33 umgeben, um Gefährdung durch Laserstrahlen auszuschließen. Mittels einer Absaugvorrichtung 32 wird nach jeder Messung die Atmosphäre von Reststoffen gereinigt, so daß Verfälschungen durch Fremdmaterialablagerungen vermieden werden.

War die Karte über die Metallkontakte zuvor als kontaktbehaftete Karte eingeordnet worden beweist das Fehlen der grünen Flammenfärbung, daß es sich um eine ABS-Karte handelt. Im Fall anderer Karten gilt diese Schlußfolgerung nicht, da auch beliebige Kunststoffe als Matrixmaterial in Gebrauch sind. Aus Sicherheitsgründen schließt sich deshalb der direkte ABS - Nachweis an.

### Kartenidentifikation ABS (Schritt c2):

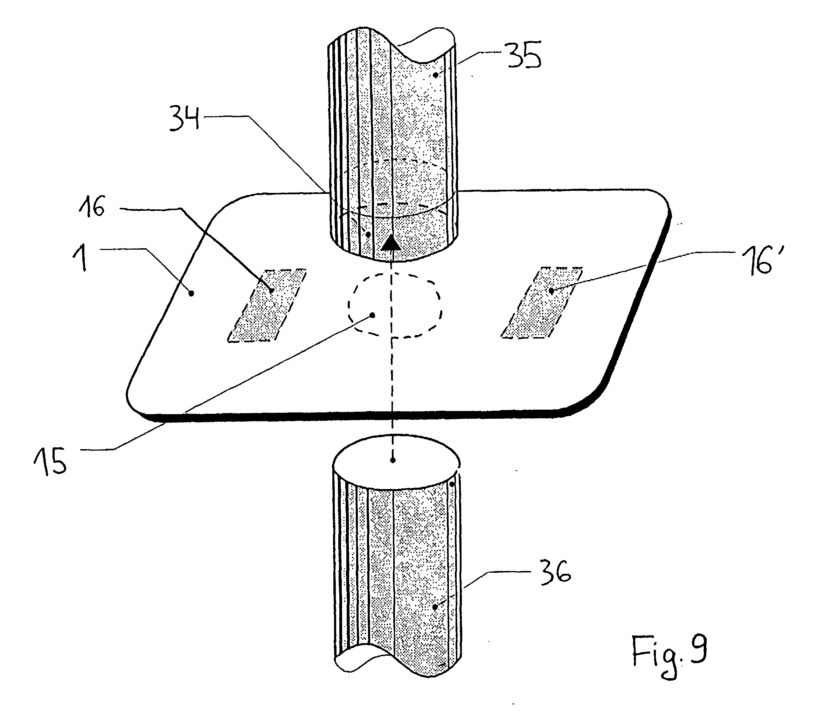

Die Meßanordnung zur Identifikation von ABS-Karten zeigt Fig. 9. Eine IR-Lichtquelle 36, z.B. ein NERNST-stift durchstrahlt die Karte 1, wobei das Licht durch den Kartenaufnehmer im Bereich der Auswurföffnung 15 tritt. Die von der Karte durchgelasssene Strahlung wird durch einen IRempfindlichen Detektor 35 registriert, wobei ein entsprechendes Kantenoder Interferenzfilter 34 nur Strahlung im Bereich von etwa 4,5 µm hindurchläßt. Handelt es sich bei dem Kartenmaterial um ABS, so erfolgt eine starke Absorption, d. h. ein deutlicher Intensitätsabfall der Strahlung. Unterschreitet dabei die Strahlungsintensität einen vorgegebenen Schwellwert, so ist das Kartenmaterial für den Rechner als ABS identifiziert.

### Auswurf von nicht identifizierten Karten (Schritt e):

Die als kontaktbehaftete Karten identifizierten Karten werden weitergeführt. Alle anderen Karten werden nach Belüften des Steuerventils 13 ausgeworfen. Hierfür sind mehrere Konstruktionselemente geeignet, die über die Auswurföffnung 15 an der Karte angreifen, z.B. über einen Luftstoß.

### Ausstanzen der metallischen Kontaktfläche mit dem darunterliegenden Siliciumchip (Schritt d):

Die Auftrennung der Karten wird mit der Beseitigung der Kontaktfläche 27 und des darunterliegenden Si-Chips verbunden, wenn die Kontaktflächen-bzw. Chipposition vorher bestimmt wurde. Stanzwerkzeuge sind hinreichend bekannt, so daß sich eine nähere Beschreibung erübrigt.

Die Kontaktflächen- und damit die Chipposition liegen asymmetrisch zur Längsachse der Karte. Da die Lage der Karte im Kartenaufnehmer durch das Zufallsprinzip bestimmt ist, sind wenigstens zwei Stanzstempel erforderlich. Wollte man exakt nur die Kontaktfläche 27 ausstanzen, so wären darüberhinaus jeweils zwei Positionen der beiden Stanzstempel erforderlich, d. h. für jeden der Stanzstempel müßte konstruktiv neben der auf-/ab-Bewegung ein zusätzlicher Translationsfreiheitsgrad vorgesehen werden.

Wie folgendes Rechenbeispiel zeigt, kann jedoch auf vier Stanzpositionen ohne große Verluste an Kartenrohmaterial verzichtet werden, wenn jeweils zwei Kontaktflächenpositionen von einer Stanzposition erfaßt werden: Die Fläche einer Standard-Telefonkarte umfaßt ca. 86 mm x 54 mm = 4644 mm². Bei insgesamt vier Stanzposition kann genau die Kontaktfläche von ca. 11 mm x 12 mm = 132 mm² ausgestanzt werden. Das sind 2.8 % der gesamten Kuntsstoffmatrix. Wird eine etwas größere Fläche von 17 mm x 12 mm= 204 mm² (4,4% der Matrixfläche) in einem Vorgang ausgestanzt, so wird mit Sicherheit die Kontaktfläche in einem Arbeitsschritt erfaßt, gleichgültig ob sie sich zufällig auf der Vorder- oder Rückseite der Karte befindet. Der zusätzliche Kunststoffverlust beträgt dann 1,6 % der Kartenmasse. Dies ist hinnehmbar, wenn man berücksichtige, daß sich dadurch die Steuerung der beiden Stanzhebel auf die vertikale Bewegungsrichtung reduziert.

### Liste der Bezugszeichen:

- 1: Karte
- 2: Vereinzelungstrichter
- 3: Transprotband
- 4: Kartenbegrenzer
- 5: Transportrolle
- 6: Walze
- 7: Kartenauswurf
- 8: Zuführungsschacht
- 9: Kartenstapel
- 10: Sortiertisch
- 11: Kartenaufnehmer
- 12: Führungsrahmen
- 13: Steuerventil
- 14: Vakuumzuführung
- 15: Auswurföffnung
- 16,16': Stanzöffnung
- 17: Randbereich
- 18,18': Ansaugöffnung
- 19,19': Aufnahme für Dichtungsring
- 20: Drehachse/ Tischachse
- 21: Anschlüsse für Vakuumzuführung bzw. Steuerventile
- 22: Vakuumzuführung von Pumpe
- 23: Vakuumpumpe
- 24, 24', 24", 24"': Prüfkontakt
- 25: optischer Sensor/ Kamera
- 26: Feder
- 27: Kontaktfläche
- 28: Laser
- 29: Filter (PVC-Intentifikation)
- 30: Detektor (sichtbares Licht)
- 31: Cu-Pulver
- 32: Absaugvorrichtung
- 33: Schutzabdeckung
- 34: IR-Filter (ABS-Intentifikation)
- 35: Detektor (IR)
- 36: IR-Lichtquelle, z.B. Nernst-Stift
- 37, 37': Kontaktfühler

## Patentansprüche

1. Verfahren zur automatischen und materialspezifischen Trennung von Karten (1) mit Daten- und Funktionsträgern (27) wie Karten (1) mit Magnetstreifen und Karten (1) mit kontaktfrei und/oder kontaktbehaftet arbeitenden elektronischen Chips, insbesondere Telefonkarten, und zur Herstellung sortenreiner PVC- und ABS-Kunststofffraktionen, **gekennzeichnet durch** die Kombination folgender rechnergesteuert automatisch ablaufender Verfahrensschritte:
a) Halterung einzelner Karten (1) in definierter Position auf einem Sortiertisch (10);
b1) Identifikation von Karten (1) mit kontaktbehaftet arbeitenden elektronischen Chips, die an der Kartenoberfläche metallische Kontaktflächen (27) aufweisen, **durch** einen oder mehrere Prüfkontakte (24, 24', 24", 24'''), welche in den Bereichen, in denen sich Kontaktflächen (27) normgemäß befinden können, an den Kartenkörper herangeführt werden und diesen berühren, wobei ein Prütkontakt (24, 24', 24", 24'''), der dabei eine metallische Kontaktfläche (27) berührt, ein Signal abgibt und dieses Signal das Vorhandensein einer kontaktbehaftet arbeitenden Chipkarte sowie die Lage der entsprechenden Kontaktfläche (27) auf der Karte (1) anzeigt,
und/oder
b2) Identifikation von Karten (1) mit kontaktbehaftet arbeitenden elektronischen Chips oder mit Magnetstreifen **durch** optische Untersuchung der Struktur der Kartenoberfläche;
c1) Identifikation von Karten (1) mit dem Kunststoff PVC als Kartenkörpermaterial **durch** Nachweis des in PVC gebundenen Chlors mittels einer Beilstein-Probe, indem Kartenkörpermaterial pyrolysiert und mit Kupfer zur Reaktion gebracht wird sowie die Lichtemission im Spektralbereich bei Wellenlängen λ zwischen etwa 500 bis 530 nm gemessen wird,
und/oder
c2) Identifikation von Karten (1) mit dem Kunststoff ABS als Kartenkörpermaterial **durch** Nachweis der in ABS enthaltenen Nitril- (CN)-Gruppe, indem das Absorptionsverhalten des Kartenkörpers im infraroten Spektralbereich bei Wellenlängen zwischen 4,2 und 4,6 µm gemessen wird;
d) Ausstanzen des Kartenkörpers im Bereich der im Verfahrensschritt b) festgestellten Kontaktflächenposition zum Entfernen des Chips und der entsprechenden Kontaktfläche (27);
e) Auswurf der in den Verfahrensschritten b1) und/oder b2) sowie c1) und/oder c2) identifizierten Karten (1) bzw. nicht identifizierter Karten in entsprechende Sammelbehälter, wodurch somit wenigstens drei Fraktionen gebildet werden, darunter jeweils eine reine PVC- und eine reine ABS-Fraktion.

2. Verfahren nach Anspruch 1, **dadurch gekennzeichnet,**
**daß** die Karten (1) zunächst vereinzelt und gestapelt werden, wobei Karten (1) aus dem Kartenstapel (9) im Verfahrensschritt a) weiterbearbeitet werden.

3. Verfahren nach Anspruch 1 oder 2, **dadurch gekennzeichnet,**
**daß** die Karten (1) im Verfahrensschritt a) durch eine oder mehrere Ansaugöffnungen (18) im Sortiertisch (10) durch Erzeugung eines Unterdrucks angesaugt und somit auf dem Sortiertisch (10) gehaltert werden.

4. Verfahren nach einem der vorangegangenen Ansprüche, **dadurch gekennzeichnet,**
**daß** die Karten (1) im Verfahrensschritt e) mittels eines Druckluftstoßes oder mittels eines mechanischen Stoßes, der durch eine Auswurföffnung (15) im Sortiertisch (10) erfolgt, oder durch Ansaugen und Herausheben der Karte vom Sortiertisch (10) ausgeworfen werden.

5. Verfahren nach einem der vorangegangenen Ansprüche, **dadurch gekennzeichnet,**
**daß** zur Identifikation von Telefonkarten die Prüfkontakte (24, 24', 24", 24"') an die für Kontaktflächen (27) bei Telefonkarten spezifischen Bereiche auf der Kartenoberfläche herangeführt werden.

6. Verfahren nach einem der vorangegangenen Ansprüche, **dadurch gekennzeichnet,**
**daß** im Verfahrensschritt b2) das ortsabhängige Reflexions- bzw. Absorptionsverhalten der Kartenoberfläche mittels wenigstens einer Lichtquelle, die sich in definierter Lage zu der auf dem Sortiertisch (10) gehalterten Karte befindet, und wenigstens eines optischen Sensors (25) untersucht wird, wobei das Sensorsignal bzw. die Sensorsignale zur Unterscheidung zwischen Karten (1) mit Kontaktflächen (27) und Karten (1) mit Magnetstreifen dienen.

7. Verfahren nach einem der vorangegangenen Ansprüche, **dadurch gekennzeichnet,**
**daß** vor der Pyrolyse des Kartenmaterials im Verfahrensschritt c1) ein Kupferpulver (31), vorzugsweise als Mischung aus Kupferpulver, Bindemittel und leicht flüchtigem Lösungsmittel, auf die Karte (1) aufgebracht wird und somit die Beilstein-Probe, die die Anwesenheit von elementarem Kupfer erfordert, durchführbar ist.

8. Verfahren nach einem der Ansprüche 1 bis 7, **dadurch gekennzeichnet,**
**daß** die Pyrolyse von Kartenmaterial mittels Laseranregung in einem definierten Bereich auf der Karte (1) erfolgt.

9. Verfahren nach einem der Ansprüche 1 bis 7, **dadurch gekennzeichnet,**
**daß** die Pyrolyse von Kartenmaterial im Verfahrensschritt c1) mittels Funkenanregung in einem definierten Bereich auf der Karte (1) erfolgt.

10. Verfahren nach Anspruch 9, **dadurch gekennzeichnet,**
**daß** zur Erzeugung einer Funkenentladung Kupferelektroden verwendet werden.

11. Verfahren nach einem der Ansprüche 1 bis 10, **dadurch gekennzeichnet,**
**daß** das Absorptionsverhalten des Kartenkörpers im Verfahrensschritt c2) bei einer Wellenlänge von etwa 4,4 µm gemessen wird.

12. Vorrichtung zur Durchführung des Verfahrens nach einem der vorangegangenen Ansprüche, **gekennzeichnet durch**:
a) einen Sortiertisch (10) mit einer Mehrzahl von rechteckförmigen Kartenaufnehmern (11) jeweils der Länge und der Breite zu trennender Karten (1), wobei jeweils eine Karte paßgenau in einen Kartenaufnehmer (11) einsetzbar und in diesem zu haltern ist;
b1) eine Identifikationseinheit zur Identifikation von Karten (1) mit elektronischen Chips, welche einen oder mehrere Prüfkontakte (24, 24', 24", 24"') aufweist, die an den im Kartenaufnehmer (11) gehalterten Kartenkörper heranführbar sind und im herangeführten Zustand den Kartenkörper in dem Bereich berühren, in dem bei den zu identifizierenden Karten (1) normgemäß metallische Kontaktflächen (27) angeordnet sein können, wobei ein Prüfkontakt (24, 24', 24", 24"') bei Berührung der Karte (1) ein vom Vorhandensein einer Kontaktfläche (27) abhängiges Signal abgibt, welches von einer Auswerteeinheit ausgewertet wird und zur Identifikation der Karte sowie zur Lagebestimmung gegebenenfalls vorhandener Kontaktflächen (27) dient,
und/oder
b2) eine Identifikationseinheit zur Identifikation von Karten (1) mit kontaktbehaftet arbeitenden elektronischen Chips oder mit Magnetstreifen, welche die Struktur der Kartenoberfläche mittels wenigstens eines optischen Sensors (25) und/oder einer Kamera optisch untersucht, wobei die Sensor-bzw. Kamerasignale im Hinblick auf charakteristische Merkmale wie Position und Art der Daten- und Funktionsträger von einer Auswerteeinheit auswertet werden;
c1) eine Identifikationseinheit zur Identifikation von Karten (1), deren Kartenkörper aus dem Kunststoff PVC besteht, bestehend aus einer Anregungsquelle (28) zur Pyrolyse einer Materialportion des Kartenkörpers, einem Detektor (30) zur Detektion elektromagnetischer Strahlung sowie einem vor dem Detektor (30) angeordneten Wellenlängenfilter (29), das für Wellenlängen λ zwischen etwa 500 bis 530 nm durchlässig ist, wobei die Intensität der detektierten Strahlung ein Maß für das Vorhandensein von Chlor und damit PVC ist,
und/oder
c2) eine Identifikationseinheit zur Identifikation von Karten (1), deren Kartenkörper aus dem Kunststoff ABS besteht, bestehend aus einer Infrarot-Lichtquelle (36), einem Infrarot-empfindlichen Detektor (35), der im Anwendungsfall auf der der Lichtquelle (36) entgegengesetzten Seite der Karte (1) angeordnet ist und somit die Absorption der Karte (1) mißt, sowie einem im Strahlengang angeordneten Filter (34), welches Wellenlängen λ zwischen 4,2 und 4,6 µm transmittiert, wobei die Intensität oder der Intensitätsabfall der transmittierten Strahlung ein Maß für die Absorption und damit für das Vorhandensein einer ABS indizierenden Nitril- (CN)-Gruppe ist;
d) eine Ausstanzeinheit, bestehend aus wenigstens einem an den Kartenaufnehmer heranführbaren Stempel, welcher im Anwendungsfall den Kartenkörper im Bereich der im Verfahrensschritt c) festgestellten Kontaktflächenposition auszustanzen imstande ist.
e) wenigstens eine Auswurfeinheit, welche einzelne Karten (1) vom Sortiertisch (10) zu entfernen und Sammelbehältern zuzuführen imstande ist.

13. Vorrichtung nach Anspruch 12, **dadurch gekennzeichnet,**
**daß** sie zur Vereinzelung der Karten (1) aus einem Kartengemisch vor dem Transport zum Sortiertisch (10) und weiterer Bearbeitung einen sich nach unten verjüngenden, oben und unten geöffneten Trichter (2) aufweist, dessen obere Öffnung zum Einschütten eines Kartengemischs dient und dessen untere Öffnung eine auf ein Transportband (3) mündende Austrittsöffnung für Karten (1) ist, wobei die untere Öffnung eine Breite, welche geringer als die Breite einer Karte ist, sowie eine Länge, welche größer als die Breite einer Karte ist, vorzugsweise ein Vielfaches der Öffnungsbreite beträgt, aufweist.

14. Vorrichtung nach Anspruch 13, **dadurch gekennzeichnet,**
**daß** am unteren Trichterrand oder im Bereich des Transportbands (3) ein Kartenbegrenzer (4) angeordnet ist, mittels dessen die Karten (1) so ausgerichtet werden, daß die Richtung ihrer Längsachse mit der Transportrichtung des Transportbands (3) übereinstimmt.

15. Vorrichtung nach einem der Ansprüche 12 bis 14, **dadurch gekennzeichnet,**
**daß** die Anregungsquelle (28) zur Pyrolyse einer Materialportion des Kartenkörpers ein gepulster Laser ist.

16. Vorrichtung nach einem der Ansprüche 12 bis 14, **dadurch gekennzeichnet,**
**daß** die Vorrichtung zur Pyrolyse einer Materialportion des Kartenkörpers mittels einer Funkenentladung zwei Elektroden, vorzugsweise Kupferelektroden aufweist.

17. Vorrichtung nach einem der Ansprüche 12 bis 16, **dadurch gekennzeichnet,**
**daß** die Infrarotlichtquelle (36) ein Nernst-Stift ist.

18. Vorrichtung nach einem der Ansprüche 12 bis 17, **dadurch gekennzeichnet,**
**daß** der Boden des Sortiertischs im Bereich eines jeden Kartenaufnehmers wenigstens eine Ansaugöffnung (18) aufweist, welche über ein Steuerventil (13) über Vakuum- bzw. Unterdruckanschluß (14) verfügt.

19. Vorrichtung nach Anspruch 18, **dadurch gekennzeichnet,**
**daß** der Boden des Sortiertischs im Bereich eines jeden Kartenaufnehmers eine Mehrzahl von Ansaugöffnungen (18) aufweist, welche in der Bodenfläche des Kartenaufnehmers peripher angeordnet sind.

20. Vorrichtung nach einem der Ansprüche 12 bis 19, **dadurch gekennzeichnet,**
**daß** der Boden des Sortiertischs im Bereich eines jeden Kartenaufnehmers (11) wenigstens eine, vorzugsweise zwei oder vier Ausstanzöffnungen (16, 16') aufweist deren Lage und Form im Anwendungsfall mit der Lage und Form des Ausstanzstempels korrespondiert.

21. Vorrichtung nach Anspruch 20, **dadurch gekennzeichnet,**
**daß** zwei Ausstanzstempel vorhanden sind, welche separat ansteuerbar sind und jeweils ein rechteckförmiges Stück aus dem Kartenkörper auszustanzen imstande sind, das sich im Bereich der Querkante der Karte symmetrisch zur Kartenlängsachse befindet.

22. Vorrichtung nach einem der Ansprüche 12 bis 21, **dadurch gekennzeichnet,**
**daß** der Boden des Sortiertischs (10) im Bereich eines jeden Kartenaufnehmers (11) wenigstens eine Auswurföffnung (15) aufweist, durch welche im Auswurffall ein Auswurfstempel mechanisch durchgreift und die Karte aus dem Kartenaufnehmer herausdrückt oder die im Auswurffall über ein Steuerventil mit einem Druckluftreservoir verbunden ist, so daß die Karte durch einen Druckluftstoß auswerfbar ist.

23. Vorrichtung nach einem der Ansprüche 12 bis 21, **dadurch gekennzeichnet,**
**daß** sie zum Auswerfen einer Karte einen Auswurfarm aufweist, welcher über ein Steuerventil über Vakuum- bzw. Unterdruckanschluß verfügt und dessen Ende als Ansaugfläche ausgebildet ist, wobei diese Ansaugfläche an den Kartenaufnehmer (11) heranführbar ist und eine darin enthaltene Karte anzusaugen und aus diesem zu entfernen imstande ist.

24. Vorrichtung nach einem der Ansprüche 12 bis 23, **dadurch gekennzeichnet,**
**daß** der Sortiertisch (10) in der Aufsicht von oben kreisförmig und um seine Mittelachse (20) drehbar ist und eine Mehrzahl von Kartenaufnehmern (11) in radialer Richtung auf bzw. in der Tischfläche angeordnet sind.

25. Vorrichtung nach Anspruch 24, **dadurch gekennzeichnet,**
**daß** der Sortiertisch (10) mittels eines Motors mit vorbestimmter Taktfrequenz und vorbestimmtem Winkelinkrement um die Mittelachse drehbar ist, wobei die Funktionselemente, insbesondere die Identifikationseinheiten, die Ausstanzeinheit und die Auswurfeinheit an den Winkelpositionen im Bereich des Sortiertisches (10) angeordnet sind, die mit momentanen Ruhepositionen der Kartenaufnehmer (11) korrespondieren.

26. Vorrichtung nach einem der Ansprüche 11 bis 24, **dadurch gekennzeichnet,**
**daß** sie eine Dosiereinheit mit einer kupferhaltigen Substanz aufweist, mittels derer ein Kupferpulver (31), vorzugsweise als Mischung aus Kupferpulver, Bindemittel und leicht flüchtigem Lösungsmittel, an definierter Stelle auf die Karten (1) aufbringbar ist.

## Claims

1. Method for the automatic and material-specific separation of cards (1) with data and function carriers (27) such as cards (1) with magnetic stripes and cards (1) with contactlessly and/or conventionally operating electronic chips, more particularly telephone cards, and for the production of segregated PVC and ABS plastic fractions, **characterized by** the combination of the following computer-controlled automatic method steps:
a) fixing of individual cards (1) in defined positions on a sorting table (10);
b1) identification of cards (1) with conventionally operating electronic chips having metallic contact faces (27) on the card surface, through one or more test contacts (24, 24', 24", 24"'), said test contacts (24, 24', 24", 24'") being brought to proximity with the card body in those regions in which there may normally be contact faces (27) and contacting said card body, wherein a test contact (24, 24', 24", 24"') which contacts a metallic contact face (27) emits a signal and said signal indicates the presence of a conventionally operating chipcard as well as the position of the corresponding contact face (27) on the card (1),
and/or
b2) identification of cards (1) with conventionally operating electronic chips or with magnetic stripes through optical examination of the structure of the card surface;
c1) identification of cards (1) with the plastic PVC as card body material through detection of the chlorine bound in PVC by means of a Beilstein test wherein card body material is pyrolized and brought to reaction with copper and wherein the emission of light is measured in the spectral range at wavelengths λ between approximately 500 and 530 nm,
and/or
c2) identification of cards (1) with the plastic ABS as card body material through detection of the nitrile (CN) group contained in ABS wherein the absorption behaviour of the card body is measured in the infrared spectral range at wavelengths between 4.2 and 4.6 µm;
d) punching out of the card body in the region of the contact face position determined in method step b) for the removal of the chip and of the corresponding contact face (27);
e) ejection of the cards (1) identified in method steps b1) and/or b2) as well as c1) and/or c2) or of non-identified cards into corresponding collection containers, whereby at least three fractions are therefore formed, including a pure PVC fraction and a pure ABS fraction.

2. Method according to claim 1, **characterized in that**
the cards (1) are first singled and stacked, wherein cards (1) from the card stack (9) are further processed in method step a).

3. Method according to claim 1 or 2, **characterized in that**
the cards (1) are suction-gripped in method step a) through one or more suction openings (18) in the sorting table (10) through generation of a partial vacuum and are thus fixed in position on the sorting table (10).

4. Method according to any one of the preceding claims, **characterized in that**
the cards (1) are ejected in method step e) by means of a compressed-air pulse or by means of a mechanical pulse made through an ejection opening (15) in the sorting table (10) or through suction-gripping and lifting-out of the card from the sorting table (10).

5. Method according to any one of the preceding claims, **characterized in that**
for identification of telephone cards, the test contacts (24, 24', 24", 24'") are brought to proximity with those regions on the card surface which are specific for contact faces (27) on telephone cards.

6. Method according to any one of the preceding claims, **characterized in that**
in method step b2) the location-dependent reflection and/or absorption behaviour of the card surface is examined by means of at least one light source in a defined position with respect to the card fixed on the sorting table (10) and by means of at least one optical sensor (25), the sensor signal(s) being used to distinguish between cards (1) with contact faces (27) and cards (1) with magnetic stripes.

7. Method according to any one of the preceding claims, **characterized in that**
prior to pyrolysis of the card material in method step c1), a copper powder (31), preferably in the form of a mixture of copper powder, binding agent and easily volatile solvent, is applied to the card (1), this allowing the performance of the Beilstein test, which requires the presence of elementary copper.

8. Method according to any one of claims 1 to 7, **characterized in that**
the pyrolysis of card material is performed in a defined region on the card (1) by means of laser excitation.

9. Method according to any one of claims 1 to 7, **characterized in that**
the pyrolysis of card material in method step c1) is performed in a defined region on the card (1) by means of spark excitation.

10. Method according to claim 9, **characterized in that**
copper electrodes are used for generation of a spark discharge.

11. Method according to any one of claims 1 to 10, **characterized in that**
the absorption behaviour of the card body is measured in method step c2) at a wavelength of approximately 4.4 µm.

12. Device for implementation of the method according to any one of the preceding claims, **characterized by**:
a) a sorting table (10) with a plurality of rectangular card holders (11) each of the length and width of the cards (1) to be separated, wherein a card is insertable with accurate fit into each card holder (11) and is to be fixed therein;
b1) an identification unit for the identification of cards (1) with electronic chips, said identification unit having one or more test contacts (24, 24', 24", 24"'), said test contacts (24, 24', 24", 24"') being able to be brought to proximity with the card body fixed in the card holder (11) and, when brought to proximity, contacting the card body in the region in which there may normally be metallic contact faces (27) on the cards (1) to be identified, wherein, on contacting the card (1), a test contact (24, 24', 24", 24"') emits a signal dependent on the presence of a contact face (27), said signal being evaluated by an evaluation unit and being used to identify the card as well as to determine the positions of any existing contact faces (27),
and/or
b2) an identification unit for the identification of cards (1) with conventionally operating electronic chips or with magnetic stripes, said identification unit optically examining the structure of the card surface by means of at least one optical sensor (25) and/or camera, the sensor and/or camera signals being evaluated by an evaluation unit with regard to characteristic features such as the position and type of the data and function carriers;
c1) an identification unit for the identification of cards (1) whose card body consists of the plastic PVC, consisting of an excitation source (28) for pyrolysis of a material portion of the card body, a detector (30) for the detection of electromagnetic radiation and a wavelength filter (29) disposed before the detector (30), said wavelength filter (29) being permeable for wavelengths λ between approximately 500 and 530 nm, the intensity of the detected radiation being a measure of the presence of chlorine and therefore of PVC,
and/or
c2) an identification unit for the identification of cards (1) whose card body consists of the plastic ABS, consisting of an infrared light source (36), an infrared-sensitive detector (35), said detector (35), when in use, being disposed on the side of the card (1) opposite the light source (36) and therefore measuring the absorption of the card (1), and further consisting of a filter (34) disposed in the optical path, said filter (34) transmitting wavelengths λ between 4.2 and 4.6 µm, the intensity or drop in intensity of the transmitted radiation being a measure of the absorption and therefore of the presence of an ABS-indicating nitrile (CN) group;
d) a punching-out unit, consisting of at least one punch, said punch being able to be brought to proximity with the card holder and being capable, when in use, of punching out the card body in the region of the contact face position determined in method step c);
e) at least one ejection unit, said ejection unit being capable of removing individual cards (1) from the sorting table (10) and of supplying them to collection containers.

13. Device according to claim 12, **characterized in that**
for singling the cards (1) from a mixture of cards prior to transport to the sorting table (10) and further processing, said device has a downwardly tapered funnel (2) open at top and bottom, the upper opening of which funnel (2) is used for pouring in a mixture of cards and the lower opening of which is an outlet opening for cards (1), said outlet opening discharging onto a transport belt (3), the lower opening being of a width smaller than the width of a card and of a length greater than the width of a card, preferably a multiple of the opening width.

14. Device according to claim 13, **characterized in that**
a card limiter (4) is disposed at the lower funnel edge or in the region of the transport belt (3), said card limiter (4) aligning the cards (1) such that the direction of their longitudinal axis is identical with the transport direction of the transport belt (3).

15. Device according to any one of claims 12 to 14, **characterized in that**
the excitation source (28) for pyrolysis of a material portion of the card body is a pulsed laser.

16. Device according to any one of claims 12 to 14, **characterized in that**
the device for pyrolysis of a material portion of the card body by means of a spark discharge has two electrodes, preferably copper electrodes.

17. Device according to any one of claims 12 to 16, **characterized in that**
the infrared light source (36) is a Nernst filament.

18. Device according to any one of claims 12 to 17, **characterized in that**
in the region of each card holder the base of the sorting table has at least one suction opening (18), said suction opening (18) having a vacuum or partial vacuum connection (14) through a control valve (13).

19. Device according to claim 18, **characterized in that**
in the region of each card holder the base of the sorting table has a plurality of suction openings (18), said suction openings (18) being peripherally disposed in the base area of the card holder.

20. Device according to any one of claims 12 to 19, **characterized in that**
in the region of each card holder (11) the base of the sorting table has at least one, preferably two or four punching-out openings (16, 16') whose position and form, when in use, correspond with the position and form of the punching-out tool.

21. Device according to claim 20, **characterized in that**
two punching-out tools are provided, said punching-out tools being separately controllable and each being capable of punching a rectangular piece out of the card body, said rectangular piece being situated in the region of the transverse edge of the card symmetrical with respect to the longitudinal axis of the card.

22. Device according to any one of claims 12 to 21, **characterized in that**
in the region of each card holder (11) the base of the sorting table (10) has at least one ejection opening (15), wherein, during ejection, said ejection opening (15) is mechanically engaged by an ejection punch to force the card out of the card holder or wherein said ejection opening (15) is connected during ejection through a control valve to a compressed-air reservoir, with the result that the card can be ejected by a pulse of compressed air.

23. Device according to any one of claims 12 to 21, **characterized in that**
for ejection of a card said device has an ejector arm, said ejector arm having a vacuum or partial vacuum connection through a control valve and the end of said ejector arm being in the form of a suction-gripping surface, said suction-gripping surface being able to be brought to proximity with the card holder (11) and being capable of suction-gripping a therein contained card and of removing said card therefrom.

24. Device according to any one of claims 12 to 23, **characterized in that**
the sorting table (10), as viewed from above, is circular and is rotatable about its centre line (20) and a plurality of card holders (11) are disposed in the radial direction on or in the table surface.

25. Device according to claim 24, **characterized in that**
the sorting table (10) is rotatable about the centre line by means of a motor with predetermined pulse frequency and predetermined angular increment, wherein the functional elements, more particularly the identification units, the punching-out unit and the ejection unit, are disposed at those angular positions in the region of the sorting table (10) which correspond with momentary rest positions of the card holders (11).

26. Device according to any one of claims 11 to 24, **characterized in that**
said device has a dosing unit with a copper-containing substance by means of which a copper powder (31), preferably in the form of a mixture of copper powder, binding agent and easily volatile solvent, is able to be applied in defined positions to the cards (1).

## Revendications

1. Procédé destiné à séparer automatiquement et de façon spécifique aux matériaux des cartes (1) ayant des supports de données et de fonction (27) comme les cartes (1) à bandes magnétiques et les cartes (1) à puces électroniques fonctionnant sans et/ou avec contact, en particulier les cartes téléphoniques, et à produire des fractions pures de matières plastiques ABS et PVC, **caractérisé par** la combinaison des étapes suivantes, automatiques et commandées par ordinateur :
a) mise en place de cartes individuelles (1) dans une position définie sur une table de tri (10) ;
b1) identification de cartes (1) avec puces électroniques fonctionnant avec contact et comportant des surfaces de contact métalliques (27) sur la surface de la carte au moyen d'un ou de plusieurs contacts de contrôle (24, 24', 24'', 24'''), lesquels sont appuyés sur le corps de la carte dans les zones où des surfaces de contact peuvent se trouver conformément aux normes, sachant qu'un contact de contrôle (24, 24', 24", 24''') entrant en contact à cette occasion avec une surface de contact métallique (27) donne un signal et que ce signal indique la présence d'une carte à puce à contact ainsi que la position de la surface de contact correspondante (27) sur la carte (1), et/ou
b2) identification de cartes (1) dotées de puces électroniques fonctionnant avec contact ou de bandes magnétiques par analyse optique de la structure de la surface de la carte ;
c1) identification de cartes (1) dont le corps est en matière plastique PVC par décèlement du chlore fixé dans le PVC au moyen d'un test de Beilstein, le matériau du corps de la carte étant pyrolysé et mis en réaction avec du cuivre et l'émission lumineuse étant mesurée dans la région spectrale avec des longueurs d'onde λ comprises entre 500 et 530 nm environ,
et/ou
c2) identification de cartes (1) dont le corps est en matière plastique ABS par décèlement des nitriles (CN) contenus dans l'ABS, le comportement d'absorption du corps de la carte étant mesuré dans la région spectrale infrarouge avec des longueurs d'onde comprises entre 4,2 et 4,6 µm ;
d) matriçage du corps de la carte dans la zone de positionnement de la surface de contact constatée à l'étape b) afin d'éliminer la puce et la surface de contact correspondante (27) ;
e) dépôt des cartes identifiées dans les étapes b1) et/ou b2) ainsi que c1) et/ou c2) ou des cartes non identifiées dans des récipients de collecte, au moins trois fractions pouvant ainsi être constituées, dont, dans chaque cas, une fraction pure PVC et une fraction pure ABS.

2. Procédé selon la revendication 1, **caractérisé en ce que** les cartes (1) sont tout d'abord isolées et empilées, les cartes (1) étant ensuite soumises à partir de la pile de cartes (9) aux opérations de l'étape a).

3. Procédé selon la revendication 1 ou 2, **caractérisé en ce que** les cartes (1) sont aspirées par dépression, dans l'étape a), par un ou plusieurs orifices d'aspiration (18) se trouvant dans la table de tri (10) et ainsi fixées sur la table de tri (10).

4. Procédé selon l'une quelconque des revendications précédentes, **caractérisé en ce que** les cartes (1) sont éjectées à l'étape e) au moyen d'un coup d'air comprimé ou d'une impulsion mécanique par un orifice de sortie (15) se trouvant dans la table de tri (10), ou par aspiration et soulèvement de la carte de la table de tri (10).

5. Procédé selon l'une quelconque des revendications précédentes, **caractérisé en ce que**, pour identifier les cartes téléphoniques, les contacts de contrôle (24, 24', 24", 24"') sont rapprochés des zones spécifiques de la surface de la carte où se trouvent les surfaces de contact (27) lorsqu'il s'agit de cartes téléphoniques.

6. Procédé selon l'une quelconque des revendications précédentes, **caractérisé en ce que**, à l'étape b2), le comportement de réflexion ou d'absorption de la surface de la carte, variable d'un endroit à l'autre, est analysé au moyen d'au moins une source lumineuse, qui se trouve dans une position définie par rapport à la carte fixée sur la table de tri (10), et d'au moins un capteur optique (25), le ou les signaux du capteur servant à distinguer les cartes (1) à surfaces de contact (27) des cartes (1) à bandes magnétiques.

7. Procédé selon l'une quelconque des revendications précédentes, **caractérisé en ce que**, avant la pyrolyse du matériau de la carte à l'étape c1), une poudre de cuivre (31), de préférence constituée d'un mélange de poudre de cuivre, de liant et de solvant facilement volatil, est étalée sur la carte (1) et un test de Beilstein, exigeant la présence de cuivre élémentaire, peut être ainsi réalisé.

8. Procédé selon l'une quelconque des revendications 1 à 7, **caractérisé en ce que** la pyrolyse du matériau de la carte est effectuée par excitation de laser sur une zone définie de la carte (1).

9. Procédé selon l'une quelconque des revendications 1 à 7, **caractérisé en ce que**, la pyrolyse du matériau de la carte est effectuée à l'étape c1) par excitation d'étincelles sur une zone définie de la carte (1).

10. Procédé selon la revendication 9, **caractérisé en ce que** des électrodes en cuivre sont utilisées afin de générer une décharge à étincelles.

11. Procédé selon l'une quelconque des revendications 1 à 10, **caractérisé en ce que**, le comportement d'absorption du corps de la carte à l'étape c2) est mesuré avec une longueur d'onde de 4,4 µm environ.

12. Dispositif destiné à réaliser le procédé selon l'une quelconque des revendications précédentes, **caractérisé par** :
a) une table de tri (10) comportant un certain nombre de supports de carte (11) rectangulaires, respectivement de la longueur et de la largeur des cartes à séparer (1), chaque support de carte (11) ne pouvant accueillir et positionner qu'une carte correspondant à ses dimensions;
b1) une unité d'identification destinée à identifier les cartes (1) ayant des puces électroniques, laquelle comprend un ou plusieurs contacts de contrôle (24, 24', 24", 24''') pouvant être approchés du corps de la carte positionnées dans le support de carte (11) jusqu'à toucher le corps dans la zone où des surfaces de contact métalliques peuvent se trouver, conformément aux normes, dans les cartes à identifier (1), sachant qu'un contact de contrôle (24, 24', 24", 24'''), en touchant la carte (1), donne un signal indiquant, le cas échéant, la présence d'une surface de contact (27), lequel signal est évalué par une unité d'évaluation et sert à identifier la carte ainsi qu'à indiquer la position, le cas échéant, des surfaces de contact (27),
b2) une unité d'identification destinée à identifier les cartes (1) dotées de puces électroniques fonctionnant avec contact ou de bandes magnétiques, laquelle analyse de façon optique la structure de la surface de la carte au moyen d'au moins un capteur optique (25) et/ou d'une caméra, sachant que les signaux du capteur ou de la caméra sont évalués par une unité d'évaluation pour mettre en évidence des signes distinctifs caractéristiques tels que position et nature des supports de données et de fonctions ;
c1) une unité d'identification destinée à identifier les cartes (1), dont le corps est en matière plastique PVC, consistant en une source d'excitation (28) pour la pyrolyse d'une partie du matériau du corps de la carte, en un détecteur (30) pour détecter le rayonnement électromagnétique ainsi qu'en un filtre de longueur d'onde (28) disposé devant le détecteur (30) et laissant passer des longueurs d'onde λ comprises entre 500 et 530 nm environ, sachant que l'intensité du rayonnement détecté est un indice de la présence de chlore et donc de PVC,
et/ou
c2) une unité d'identification destinée à identifier les cartes (1) dont le corps est en matière plastique ABS, consistant en une source lumineuse infrarouge (36), un détecteur sensible à l'infrarouge (35), qui est disposé, en cas d'application ,sur le côté opposé à la source lumineuse de la carte (1) et mesure donc l'absorption de la carte (1), ainsi qu'un filtre (34) disposé dans le passage des rayons, lequel transmet des longueurs d'onde λ comprises entre 4,2 et 4,6 µm, sachant que l'intensité ou la chute d'intensité du rayonnement transmis est un indice de l'absorption et donc de la présence d'un groupe de nitriles (CN) mettant en évidence l'ABS ;
d) une unité de matriçage, consistant en au moins une matrice pouvant être approchée du support de carte, laquelle est à même, en cas d'application, de matricer le corps de la carte dans la zone de positionnement de la surface de contact constatée à l'étape c),
e) au moins une unité d'éjection, laquelle est à même d'éliminer des cartes données (1) de la table de tri (10) et de les déposer dans des récipients de collecte.

13. Dispositif selon la revendication 12, **caractérisé en ce qu'**il comprend un entonnoir (2) ouvert en haut et en bas et se rétrécissant vers le bas afin d'isoler les cartes (1) à partir d'un mélange de cartes avant le transport vers la table de tri (10) et le traitement ultérieur, l'orifice supérieur dudit entonnoir servant à déverser un mélange de cartes, lesquelles cartes (1) sortent par l'orifice inférieur pour tomber sur une bande transporteuse (3), sachant que l'orifice inférieur a une largeur inférieure à celle d'une carte et une longueur supérieure à la largeur d'une carte, de préférence un multiple de la largeur de l'orifice.

14. Dispositif selon la revendication 13, **caractérisé en ce que**, sur le bord inférieur de l'entonnoir ou au niveau de la bande transporteuse (3) est disposé un délimiteur de cartes (4), au moyen duquel les cartes (1) sont orientées de façon à ce que le sens de leur axe longitudinal concorde avec le sens de transport de la bande transporteuse (3).

15. Dispositif selon l'une quelconque des revendications 12 à 14, **caractérisé en ce que** la source d'excitation (28) pour pyrolyser une partie du matériau du corps de la carte est un laser pulsé.

16. Dispositif selon l'une quelconque des revendications 12 à 14, **caractérisé en ce que** le dispositif destiné à pyrolyser une partie du matériau du corps de la carte au moyen d'une décharge d'étincelles comprend deux électrodes, de préférence en cuivre.

17. Dispositif selon l'une quelconque des revendications 12 à 16, **caractérisé en ce que** la source lumineuse infrarouge (36) est une broche de Nernst.

18. Dispositif selon l'une quelconque des revendications 12 à 17, **caractérisé en ce que** le fond de la table de tri comprend au moins un orifice d'aspiration (18) dans chaque zone correspondant à un support de carte, lequel orifice est relié par l'intermédiaire d'une valve de commande (13) à un dispositif de mise sous vide ou de dépression (14).

19. Dispositif selon la revendication 18, **caractérisé en ce que** le fond de la table de tri comprend un nombre important d'orifices d'aspiration (18) dans chaque zone correspondant à un support de carte, lesdits orifices étant disposés de manière périphérique sur le fond du support de carte.

20. Dispositif selon l'une quelconque des revendications 12 à 19, **caractérisé en ce que** le fond de la table de tri comprend, dans chaque zone correspondant à un support de carte (11), au moins un, et de préférence deux ou quatre trous de matrice (16, 16') dont la position et la forme correspondent, en cas d'application, à la situation et à la forme de la matrice de découpage.

21. Dispositif selon la revendication 20, **caractérisé en ce que** deux matrices de découpage sont présentes, lesquelles peuvent être commandées séparément et sont chacune à même de découper dans le corps de la carte une pièce rectangulaire, qui se trouve le long du bord transversal de la carte et est disposée de façon symétrique par rapport à l'axe longitudinal de la carte.

22. Dispositif selon l'une quelconque des revendications 12 à 21, **caractérisé en ce que** le fond de la table de tri (10) comprend au moins un orifice de sortie (15) dans chaque zone correspondant à un support de carte (11), un tampon d'éjection pénétrant , en cas d'éjection, de façon mécanique par cet orifice et dégageant la carte de son support ou l'orifice étant relié en cas d'éjection à un réservoir d'air comprimé par l'intermédiaire d'une valve de commande, pour que la carte soit éjectable par un coup d'air comprimé.

23. Dispositif selon l'une quelconque des revendications 12 à 21, **caractérisé en ce qu'**il comprend, pour l'éjection d'une carte, un bras d'éjection relié par l'intermédiaire d'une valve de commande à un dispositif de mise sous vide ou de dépression et dont l'extrémité est conçue comme surface d'aspiration, laquelle peut être approchée du support de carte (11) et est à même d'aspirer une carte qui s'y trouve et de l'en dégager.

24. Dispositif selon l'une quelconque des revendications 12 à 22, **caractérisé en ce que** la table de tri (10) est circulaire vue d'en haut et rotative autour de son axe central (20), et **en ce qu'**un nombre important de supports de carte (11) sont disposés en rayons sur ou dans la surface de la table.

25. Dispositif selon la revendication 24, **caractérisé en ce que**, la table de tri (10) tourne autour de son axe central au moyen d'un moteur à une fréquence et avec un incrément d'angle prédéterminés, les éléments fonctionnels, en particulier les unités d'identification, l'unité de matriçage et l'unité d'éjection sont disposés sur les positions d'angle, dans la zone de la table de tri (10), qui correspondent aux positions de repos momentanées des supports de cartes (11).

26. Dispositif selon l'une quelconque des revendications 11 à 24, **caractérisé en ce qu'**il comprend une unité de dosage avec une substance cuprifère, au moyen de laquelle une poudre de cuivre (31), de préférence constituée d'un mélange de poudre de cuivre, de liant et de solvant facilement volatil, peut être étalée à un endroit défini sur les cartes (1).
